# EUROPÄISCHE PATENTSCHRIFT

(11) **EP 0 400 307 B1**
(45) Veröffentlichungstag und Bekanntmachung des Hinweises auf die Patenterteilung: **26.01.1994**
(21) Anmeldenummer: 90106882.5
(22) Anmeldetag: 10.04.1990
(51) Int. Cl.: B29C 47/08, B29C 47/42, B29C 47/38

(54) **Vorrichtung und Verfahren zum Abdichten eines Scherdornes oder einer Schnecke einer Extrusionsmaschine für Kautschukmischungen und/oder Kunststoffe**
Device and method for sealing off a shear mandrel or a screw of an extruder for rubber compounds and/or plastics material
Dispositif et procédé pour rendre étanche le mandrin de cisaillement ou la vis sans fin d'une extrudeuse pour mélanges de caoutchouc et/ou de matière plastique

(30) Priorität: 31.05.1989 DE 3917678
(43) Veröffentlichungstag der Anmeldung: 05.12.1990
(73) Patentinhaber: PAUL TROESTER MASCHINENFABRIK, D-30519 Hannover (DE)
(72) Erfinder: Klein, Heinz, D-3017 Pattensen (DE)
(74) Vertreter: Junius, Walther, Dr.

(56) Entgegenhaltungen:
- DE-A- 2 520 727
- DE-B- 2 218 087
- DE-C- 3 212 159
- US-A- 3 245 116

## Beschreibung

Die Erfindung betrifft eine Vorrichtung und ein Verfahren zum Abdichten eines Scherdornes oder einer Schnecke einer Extrusionsmaschine für Kautschukmischungen und/oder Kunststoffe, bestehend aus einem auf dem Scherdorn oder der Schnecke angeordneten Sperrgewinde und einer Vorrichtung zur Zuführung einer Dichtungsmasse in dieses Sperrgewinde.

Schnecken und noch mehr Scherdorne bereiten im Betrieb von Extrusionsmaschinen dadurch Probleme, daß die unter Druck stehende zu extrudierende Masse den Zylinder außer an dem vorgesehenen Austritt auch an der Stelle zu verlassen bestrebt ist, durch die das antriebsseitige Ende der Schnecke bzw.des Scherdornes hindurchgeführt ist. Aus diesem Grunde versucht man die Spaltweite an dieser Stelle möglichst eng zu halten und die Schneckenwelle bzw. die Scherdornwelle mit flachen, schraubenartigen Nuten gleicher Steigungsrichtung wie die Schnecke bzw. gleicher Förderrichtung wie der Scherdorn zu versehen, damit in diesen Spalt eintretendes zu extrudierendes Material in den Extruder- bzw. Scherdornzylinder zurückgeführt wird. Diese flachen schraubenartigen Nuten werden als "Sperrgewinde" bezeichnet und sind durch die DE-PS 1529 801 bekannt.

Ein derartiges Sperrgewinde reicht aber in vielen Anwendungsfällen nicht aus. Daher hat man nach Möglichkeiten gesucht, um durch die Einführung von Dichtungsmitteln die Sperrwirkung dieses Sperrgewindes zu vergrößern. Eine durch offenkundige Vorbenutzung bekannt gewordene Form der Einführung eines Dichtmittels besteht in der Anordnung eines gesonderten Extruders, in welchem pulverförmiger Kunststoff plastifiziert und in dieser plastifizierten verflüssigten Form durch einen Kanal zum Sperrgewinde hingepreßt wird. Dieser verflüssigte Kunststoff wirkt hier als Schmier- und Dichtungsmittel und verhindert, daß eine zu extrudierende Kautschukmischung in unerwünschter Weise am antriebsseitigen Ende der Schnecke bzw. des Scherdornes austritt. Diese Art der Abdichtung hat jedoch zwei ganz wesentliche Nachteile: Der Aufwand für einen gesonderten Extruder, mag er auch von kleiner Bauform sein, ist erheblich und beeinflußt die Anschaffungs- und Unterhaltungskosten der Extrusionsmaschine erheblich. Die Zuführung des thermisch verflüssigten Kunststoffes führt dazu, daß ein Teil dieses verflüssigten Kunststoffes mit der zu extrudierenden Kautschukmischung vermischt wird, so daß diese Kautschukmischung nun Bestandteile enthält, welche nicht in die Kautschukmischung hineingehören.

Durch das Verfahren der gattungsbildenden DE-PS 32 12 159 ist diese Art der Abdichtung noch verfeinert worden, indem eine Kühlung und eine Erwärmung derjenigen Kammer vorgenommen wird, in welcher der mit dem Sperrgewinde versehene Teil des Scherdornes oder der Schnecke rotiert. Der Ringspalt wird auf der dem Zylinder abgewandten, dem Antrieb zugewandten Seite gekühlt, damit die Viskosität des ein gepreßten flüssigen Kunststoffes hier höher ist als in dem dem Zylinder zugewandten Teil. Der hier in den Ringspalt eingepreßte thermoplastisch verflüssigte Kunststoff ist daher bestrebt, eher in den als Bearbeitungsraum für die zu extrudierende Masse dienenden Zylinder zu fließen als antriebsseitig aus der Dichtungskammer auszutreten. Der herstellungstechnische und maschinelle Aufwand wird hierdurch nicht herabgesetzt, sondern noch weiter erhöht, auch wird der Eintritt von Dichtungsmasse in das zu extrudierende Material nicht vermieden, sondern begünstigt.

Zur Fütterung eines Extruders ist es bekannt geworden, an der Einspeisungsstelle mehrere Zylinder vorzusehen, in denen wechselweise Kolben verschiebbar sind, die das im Extruder zu bearbeitende Material in die Schneckengänge einschieben (US-A-32 45 116).

Durch die DE-B-22 18 087 ist es bei einem Extruder bekannt geworden, den Einzugstrichter durch eine Trennwand in zwei Teile zu teilen. In den einen Teil wird ein im Extruder zu verarbeitender Kautschukstreifen eingezogen, im anderen Teil ist ein Preßkolben angeordnet, welcher das beim Einzug durch die Schneckenbewegung im Einzugstrichter hochgedrückte zu verarbeitende Material wieder gegen die Schnecke preßt und damit für eine gleichbleibende Schneckenfüllung sorgt.

Die vorliegende Erfindung vermeidet die Nachteile des Standes der Technik. Es ist die Aufgabe der vorliegenden Erfindung, den herstellungstechnischen maschinellen Aufwand erheblich zu reduzieren, die Dichtungsmasse für die Dichtung besser zu nutzen und eine Möglichkeit zu schaffen, möglichst wenig Dichtungsmaterial in das zu extrudierende Material eintreten zu lassen.

Die Erfindung besteht darin, daß die Zuführungsvorrichtung ein Preßkolben ist, der in einem Hohlraum verschiebbar ist, der mit einer Füllöffnung versehen ist und eine unmittelbare Verbindung zu der das Sperrgewinde aufnehmenden Dichtungskammer hat, wobei die Dichtungsmasse Kunststoffgranulat ist.

Ein derartiger Preßkolben, der in einem Hohlraum verschiebbar ist, ist ein einfach herstellbares, leicht mit konventionellen Mitteln antreibbares Bauteil, das den maschinellen Aufwand für die Dichtung erheblich herabsetzt. Die Wartung dieser Vorrichtung ist nicht nur sehr viel einfacher, sie erfordert auch nur stark verminderte Wartungszeiten. Eine Reinigung nach Außerbetriebsetzung ist nicht erforderlich. Dabei ist die Dichtungswirkung erheblich verbessert, weil nicht zuvor verflüssigter Kunststoff dem Sperrgewinde zugeführt wird, sondern Kunststoffgranulat, welches erst dann aufschmilzt, wenn es bereits im Sperrgewinde ist. Dieses Granulat durchläuft beim Aufschmelzen Phasen, in denen es sehr niedrig viskos ist und dadurch erheblich verbesserte Abdichtungswirkungen als bereits zuvor verflüssigtes Kunststoffmaterial aufweist. Dadurch gestaltet sich der Betrieb der Extrusionsmaschine sehr viel einfacher, die Wartungsarbeiten und -zeiten sind stark vermindert, eine Reinigung nach Außerbetriebsetzung kann entfallen und die Dichtungswirkung des eingesetzten Dichtungsmaterials ist wesentlich erhöht. Dabei kann diese Vorrichtung so im Betrieb gesteuert werden, daß keinerlei Dichtungsmasse in das Extrudat hineingelangt. Hierdurch wird das Extrudat in seiner Qualtät verbessert.

Baulich wird diese Vorrichtung sehr einfach, wenn der Preßkolben durch eine Stirnseite einer in den Hohlraum einschiebbaren Stange mit einem Antrieb zu ihrer Verschiebung in ihrer Längsachse gebildet ist.

Weiter wird der Aufbau dieser Vorrichtung sehr einfach, wenn der Antrieb für die Stange ein Servomotor, vorzugsweise eine Kolben-Zylindereinheit ist, bei der die Stange die Kolbenstange ist.

Nicht nur der Aufbau, sondern auch die Arbeitsweise dieser Vorrichtung wird dadurch sehr einfach, daß der Hohlraum, in den die Stange einschiebbar ist, an seinem dem Sperrgewinde abgewandten Ende trichterförmig erweitert ist und vorzugsweise den Boden eines Vorratsgefäßes für die Dichtungsmasse, nämlich das Granulat, bildet. Die Stange, die gleichzeitig Kolbenstange des hydraulischen oder pneumatischen Servomotors ist, wird im Betrieb so lange in Richtung auf das Sperrgewinde bewegt, bis der wesentliche Inhalt an Granulat in dem Hohlraum aus diesem herausgepreßt ist. Zur erneuten Füllung des Hohlraumes mit Granulat wird die Stange zurückgezogen, bis sie außerhalb des Hohlraumes befindlich ist und das granulatförmige Dichtungsmaterial durch den Trichter in den Hohlraum hineinfallen kann. Dieser Hohlraum ist zweckmäßigerweise zylindrisch, er kann aber auch jede beliebige Querschnittsform aufweisen. Die zur Bewegung der Stange erforderlichen Drucke sind nicht sehr hoch, es kann daher mit Vorteil ein pneumatischer Antrieb verwendet werden.

Zweckmäßig ist es, wenn im oder am Weg der Stange zwei Schalter einer Steuerungsvorrichtung für den Antrieb der Stange angeordnet sind. Mit diesen zwei Schaltern wird eine Steuerung vorgenommen, bei der die Stange jeweils zwischen zwei Endstellungen verschoben wird, einer Endstellung dicht am Sperrgewinde und einer weiteren Endstellung außerhalb des Hohlraumes und des Trichters.

Vorteilhaft ist es weiterhin, wenn sich das Sperrgewinde zu beiden Seiten der Mündung des Hohlraumes befindet. Vorteilhaft ist es, wenn die Dichtkammer mit einer Temperiervorrichtung für die Einhaltung einer möglichst gleichmäßigen Temperatur längs der Kammerwandung versehen ist, wobei diese Temperatur zweckmäßigerweise über die gesamte Länge des Sperrgewindes und beider Teile des Sperrgewindes unterhalb des Schmelzpunktes des Granulates liegt.

Um das Granulat nicht schon vor dem Eintritt in die Dichtungskammer aufzuschmelzen, ist es zweckmäßig, wenn zwischen dem Hohlraum, in dem die Stange verschiebbar ist, und der Dichtungskammer (und insbesondere deren Wandung) eine thermische Isolierung angeordnet ist.

Um Verklemmungen und Verklebungen des Granulates innerhalb des Vorratsgefäßes zu vermeiden, ist es zweckmäßig, wenn in den Trichter eine Blasvorrichtung mündet oder im Trichter eine Rühr- oder Bewegungsvorrichtung für das Granulat angeordnet ist. Auf diese Weise wird eine immer gleichmäßige Füllung des Hohlraumes mit Granulat im Augenblick des Verlassens der Stange aus dem Hohlraum erreicht.

Als zweckmäßig hat es sich erwiesen, wenn am Ort der Mündung des Hohlraumes für die Granulatzufuhr in die das Sperrgewinde aufnehmende Kammer das Sperrgewinde durch eine Umfangsrille unterbrochen ist, in die dann das Granulat eingepreßt wird.

Zweckmäßig ist es, wenn Meßgeber zum Messen der aus der Kammer austretenden Dichtungsmasse und/oder Druckmeßgeber in der Kammer angeordnet sind, die an die Steuerungsvorrichtung für den Antrieb der Stange angeschlossen sind. Mit Hilfe solcher Meßgeber ist es leichter als durch empirische Einstellung möglich, zu verhindern, daß Dichtungsmasse in das Extrudat eintritt.

Das erfindungsgemäße Verfahren zeichnet sich dadurch aus, daß man als Dichtungsmasse Kunststoffgranulat verwendet. Die Verwendung dieses Granulats hat nicht nur den Vorteil einer einfacheren maschinellen Ausstattung der Extrusionsmaschine, sondern den Vorteil einer erhöhten Dichtwirkung.

Dabei ist es zweckmäßig, wenn man nur so viel Kunststoffgranulat in das Sperrgewinde einpreßt, daß die aus dem Sperrgewinde entgegen der Förderrichtung austretende Masse nur geringfügig größer als die in das Sperrgewinde eingepreßte Masse des Kunststoffgranulates ist. Hierdurch wird eine sehr sparsame Verwendung des Kunststoffgranulats sichergestellt und vor allem sichergestellt, daß kein Dichtmittel in das Extrudat gelangen kann.

Weiterhin ist es vorteilhaft, wenn man die das Sperrgewinde aufnehmende Kammer auf eine möglichst unter der Schmelztemperatur des Granulats liegende Temperatur gleichmäßig über die Länge temperiert.

Das Wesen der Erfindung ist nachstehend als eines in der Zeichnung schematisch dargestellten Ausführungsbeispieles näher erläutert. Es zeigen:

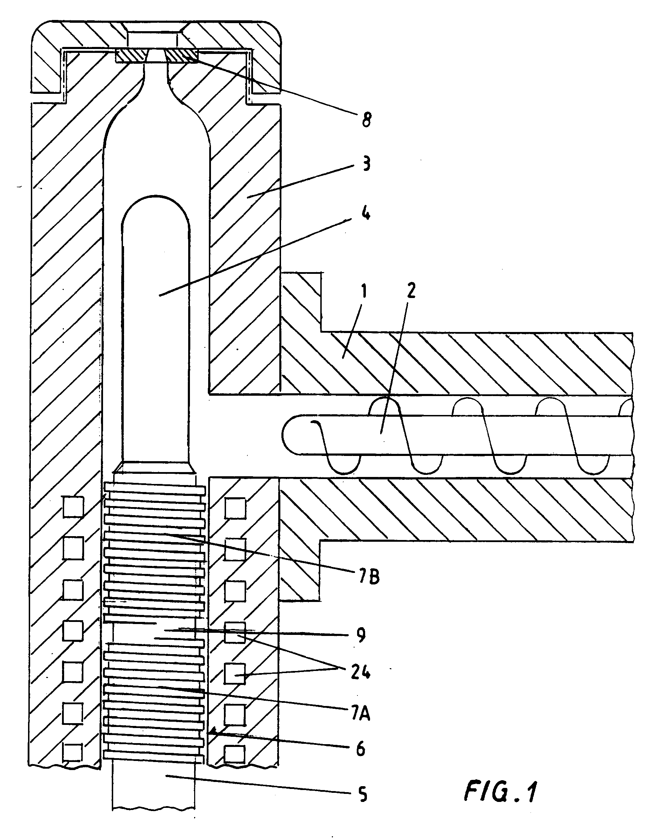

- Fig. 1: einen Querschnitt durch das Ende einer Extrusionsvorrichtung mit einer an dieses Ende angeschlossenen Schervorrichtung,

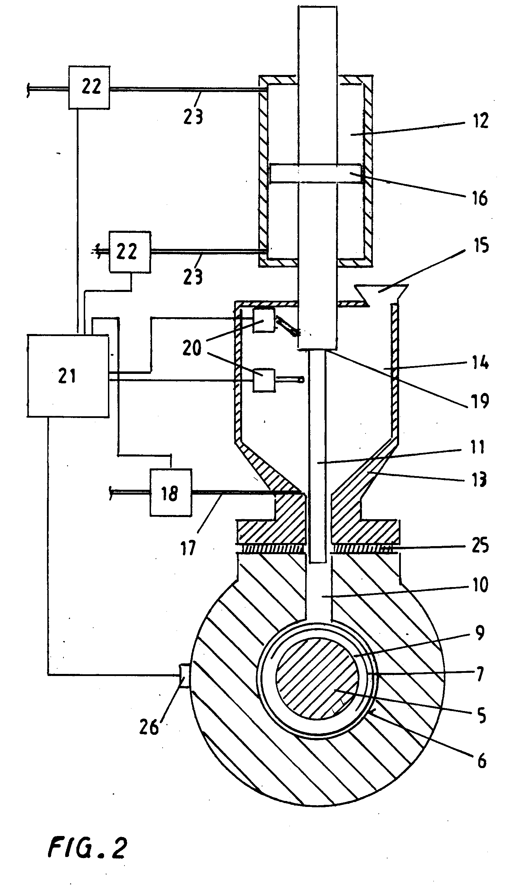

- Fig. 2: einen Schnitt durch die Schervorrichtung und die Vorrichtung für die Zuführung des Granulates.

Im Extruderzylinder 1 rotiert die Extruderschnecke 2 und fördert zu extrudierendes Material in den Scherkopf 3, 4, der mit seinem Scherkopfgehäuse 3 an das Ende des Extruderzylinders 1 angeflanscht ist. Im Scherkopfgehäuse 3 rotiert der Scherdorn 4,der von der Scherdornwelle 5 angetrieben ist. Diese Scherdornwelle 5 durchsetzt die Dichtungskammer 6 und ist im Bereich dieser Dichtungskammer 6 mit einem Sperrgewinde 7 versehen. Das Sperrgewinde hat bei der gegebenen Drehrichtung des Scherdornes 4 eine Förderrichtung in Richtung zum Extrusionswerkzeug 8. Etwa in der Mitte des Sperrgewindes 7 ist in der Scherdornwelle 5 eine Umfangsrille 9 vorgesehen, die das Sperrgewinde in einen antriebsseitigen Teil 7A und einen scherdornseitigen Teil 7B unterteilt.

In diese Umfangsrille 9 wird als Dichtungsmaterial Kunststoffgranulat eingepreßt. Dazu ist eine Einpreßvorrichtung vorgesehen, die aus einem Hohlraum in Form eines Einpreßkanales 10 und einer Preßstange 11 besteht. Diese Preßstange 11 ist gleichzeitig die Kolbenstange ein er pneumatischen Kolben-Zylinder-Einheit 12, die Stirnseite der Preßstange 11 dient als Preßkolben für das Einpressen des Granulats in die Umfangsrille 9 und damit in das Sperrgewinde 7.

Der Einpreßkanal 10 ist an seinem dem Sperrgewinde 7 abgewandten Ende zu einem Trichter 13 erweitert, der den Boden eines Vorratsgefäßes 14 mit der Granulateinfüllöffnung 15 bildet. Die Einpreßstange 11 ist durch den Kolben 16 der Kolben-Zylinder-Einheit 12 in eine Stellung zurückziehbar, in der der Weg für Granulat aus dem Vorratsgefäß 14 in den Einpreßkanal 10 offen ist. Damit das Granulat einwandfrei in den Einpreßkanal 10 nach Zurückziehung der Preßstange 11 fallen kann, ist zusätzlich eine Blasvorrichtung 17 in Form einer Preßluftleitung mit Magnetventil 18 in den Trichter 13 geführt. Die Preßstange 11 weist einen Absatz 19 auf, welcher als Betätigungsmittel für zwei Schalter 20 dient, die der Steuerung des Antriebes der Preßstange 11 dienen. Diese Schalter 20 sind an eine Steuerungsvorrichtung 21 angeschlossen, die der Steuerung der Magnetventile 22 in den Druckluftleitungen 23 für die Bewegung des Kolbens 16 dient.

Während für die Einsteuerung der Preßstange 11 in ihre Endstellungen die Schalter 20 vorgesehen sind, die an die Steuerungsvorrichtung 21 für die Bewegung der Preßstange 11 angeschlossen sind und die Magnetventile 22 über die Steuerungsvorrichtung 21 betätigen, ist die Vorschubgeschwindigkeit der Preßstange 11 durch Druckmeßgeber gesteuert, die ihre gemessenen Werte ebenfalls an die Steuerungsvorrichtung 21 geben, die durch Öffnen und Schließen der in den Druckluftleitungen 23 befindlichen Magnetventile 22 die Vorschubgeschwindigkeit des Kolbens 16 steuert. Mit Hilfe dieser Steuerung läßt sich einstellen, daß immer genügend Dichtungsmasse im Sperrgewinde 7 vorhanden ist, aber kein Dichtungsmittel in das Extrudat eintritt.

Damit das Dichtungsmittel immer eine geeignete Konsistenz aufweist, ist es zweckmäßig, das Scherkopfgehäuse 3 im Bereich der Dichtungskammer 6 mit einer Temperiervorrich tung 24 in Form von Kanälen für eine Temperierflüssigkeit zu versehen. Damit das Dichtungsmaterial in Form von Granulat die Umfangsrille 9 erreicht, ist es zweckmäßig, eine thermische Isolierung 25 zwischen dem Trichter 13 und dem Einpreßkanal 10 einerseits und der Dichtungskammer 6 vorzusehen.

## Patentansprüche

1. Vorrichtung zum Abdichten eines Scherdornes oder einer Schnecke einer Extrusionsmaschine für Kautschukmischungen und/oder Kunststoffe,
bestehend aus einem auf dem Scherdorn oder der Schnecke angeordneten Sperrgewinde und einer Vorrichtung zur Zuführung einer Dichtungsmasse in das Sperrgewinde,
dadurch gekennzeichnet,
daß die Zuführungsvorrichtung ein Preßkolben (11) ist, der in einem Hohlraum (10) verschiebbar ist, der mit einer Füllöffnung versehen ist und eine unmittelbare Verbindung zu der das Sperrgewinde (7) aufnehmenden Dichtungskammer (6) hat,
und daß die Dichtungsmasse Kunststoffgranulat ist.

2. Vorrichtung nach Anspruch 1,
dadurch gekennzeichnet,
daß der Preßkolben durch eine Stirnseite einer in den Hohlraum (10) einschiebbaren Stange (11) mit einem Antrieb (12) zu ihrer Verschiebung in ihrer Längsachse gebildet ist.

3. Vorrichtung nach Anspruch 1 und 2,
dadurch gekennzeichnet,
daß der Antrieb für die Stange (11) ein Servomotor (12), vorzugsweise eine Kolben-Zylinder-Einheit ist, bei der die Stange vorzugsweise die Kolbenstange ist.

4. Vorrichtung nach Anspruch 1 und 2,
dadurch gekennzeichnet,
daß der Hohlraum (10), in den die Stange (11) einschiebbar ist, an seinem dem Sperrgewinde (7) abgewandten Ende zu einem Trichter (13) erweitert ist und vorzugsweise den Boden eines Vorratsgefäßes (14) für die Dichtungsmasse bildet.

5. Vorrichtung nach Anspruch 1 und 2,
dadurch gekennzeichnet,
daß im oder am Weg der Stange (11) zwei Schalter (20) einer Steuerungsvorrichtung (21) für den Antrieb der Stange (11) angeordnet sind.

6. Vorrichtung nach Anspruch 1,
dadurch gekennzeichnet,
daß sich das Sperrgewinde (7) zu beiden Seiten der Mündung des Hohlraumes (10) befindet.

7. Vorrichtung nach Anspruch 1 und 6,
dadurch gekennzeichnet,
daß die Dichtungskammer (6) mit einer Temperiervorrichtung (24) für die Einhaltung einer möglichst gleichmäßigen Temperatur längs der Wandung der Dichtungskammer (6) versehen ist.

8. Vorrichtung nach Anspruch 1,
dadurch gekennzeichnet,
daß zwischen dem Hohlraum (10), in dem die Stange (11) verschiebbar ist, und der Dichtungskammer (6) (und insbesondere deren Wandung) eine thermische Isolierung (25) angeordnet ist.

9. Vorrichtung nach Anspruch 1 und 4,
dadurch gekennzeichnet,
daß in den Trichter (13) eine Blasvorrichtung (17,18) mündet oder im Trichter (13) eine Rühr- oder Bewegungsvorrichtung für das Granulat angeordnet ist.

10. Vorrichtung nach Anspruch 1,
dadurch gekennzeichnet,
daß am Ort der Mündung des Hohlraumes (10) für die Granulatzufuhr in die das Sperrgewinde (7) aufnehmende Dichtungskammer (6) das Sperrgewinde durch eine Umfangsrille (9) unterbrochen ist.

11. Vorrichtung nach Anspruch 1,
dadurch gekennzeichnet,
daß Meßgeber zum Messen der aus der Dichtungskammer (6) austretenden Masse und/oder Druckmeßgeber in der Dichtungskammer (6) angeordnet sind, die an die Steuerungsvorrichtung (21) für den Antrieb der Stange (11) angeschlossen sind.

12. Verfahren zum Abdichten eines mit einem Sperrgewinde versehenen Scherdornes oder einer mit einem Sperrgewinde versehenen Schnecke einer Extrusionsmaschine für Kautschukmischungen und/oder Kunststoffe, durch Zuführung einer Dichtungsmasse in dieses Sperrgewinde,
dadurch gekennzeichnet,
daß man als Dichtungsmasse Kunststoffgranulat verwendet.

13. Verfahren nach Anspruch 12,
dadurch gekennzeichnet,
daß man nur so viel Kunststoffgranulat in das Sperrgewinde einpreßt, daß die aus dem Sperrgewinde entgegen der Förderrichtung austretende Masse nur geringfügig größer als die in das Sperrgewinde eingepreßte Masse des Kunststoffgranulates ist.

14. Vorrichtung nach Anspruch 12,
dadurch gekennzeichnet,
daß man die das Sperrgewinde aufnehmende Kammer auf eine möglichst unter der Schmelztemperatur des Granulates liegende Temperatur temperiert.

## Claims

1. A device for sealing a shearing mandrel or a screw of an extrusion machine for rubber mixtures and/or synthetic resins, consisting of a blocking thread which is arranged on the shearing mandrel or the screw, and of a device for supplying a sealing mass into the blocking thread, characterised in that the supply device is a plunger piston (11) which is displaceable in a cavity (10) which is provided with a filling opening and which is directly connected to the sealing chamber (6) which accommodates the blocking thread (7), and that the sealing mass is synthetic resin granulate.

2. A device as claimed in Claim 1, characterised in that the plunger piston is formed by an end side of a rod (11), which is insertable into the cavity (10), with a drive means (12) for the displacement of said rod in its longitudinal axis.

3. A device as claimed in Claim 1 and 2, characterised in that the drive means for the rod (11) is a servomotor (12), preferably a piston-cylinder unit wherein the rod is preferably the piston rod.

4. A device as claimed in Claim 1 and 2, characterised in that the cavity (10), into which the rod (11) is insertable, is widened to form a funnel (13) at its end facing away from the blocking thread (7) and preferably forms the base of a feed vessel (14) for the sealing mass.

5. A device as claimed in Claim 1 and 2, characterised in that two switches (20) of a control device (21) for driving the rod (11) are arranged in or by the path of the rod (11).

6. A device as claimed in Claim 1, characterised in that the blocking thread (7) is arranged on both sides of the opening of the cavity (10).

7. A device as claimed in Claim 1 and 6, characterised in that the sealing chamber (6) is provided with a temperature regulating device (24) to maintain as uniform as possible a temperature along the walls of the sealing chamber (6).

8. A device as claimed in Claim 1, characterised in that a thermal insulation means (25) is arranged between the cavity (10), in which the rod (11) is displaceable, and the sealing chamber (6) (and in particular the walls thereof).

9. A device as claimed in Claim 1 and 4, characterised in that a blower device (17, 18) opens into the funnel (13), or an agitating-or moving device for the granulate is arranged in the funnel (13).

10. A device as claimed in Claim 1, characterised in that at the location at which the cavity (10) for the granulate supply leads into the sealing chamber (6) which accommodates the blocking thread (7), the blocking thread is interrupted by a peripheral groove (9).

11. A device as claimed in Claim 1, characterised in that sensors for measuring the mass issuing from the sealing chamber (6) and/or pressure sensors are arranged in the sealing chamber (6), which sensors are connected to the control device (21) for the driving of the rod (11).

12. A process for sealing a shearing mandrel provided with a blocking thread or a worm provided with a blocking thread of an extrusion machine for rubber mixtures and/or synthetic resins by supplying a sealing mass into this blocking thread, characterised in that synthetic resin granulate is used as sealing mass.

13. A process as claimed in Claim 12, characterised in that only sufficient synthetic resin granulate is impressed into the blocking thread in order that the mass emerging from the blocking thread in the direction opposite to the direction of conveyance is only slightly greater than the synthetic resin granulate mass impressed into the blocking thread.

14. A device as claimed in Claim 12, characterised in that the chamber which accommodates the blocking thread is regulated to a temperature which as far as possible is below the melting temperature of the granulate.

## Revendications

1. Dispositif pour étancher un mandrin de cisaillement ou une vis d'une extrudeuse pour mélanges de caoutchouc et/ou matières plastiques, composé d'un filetage d'arrêt disposé sur le mandrin de cisaillement ou la vis, et d'un dispositif pour l'amenée d'une matière d'étanchéité dans le filetage d'arrêt, caractérisé en ce que le dispositif d'amenée est un piston de pression (11) qui peut coulisser dans une cavité (10) qui est munie d'une ouverture de remplissage et possède une liaison directe avec la chambre d'étanchement (6) qui renferme le filetage d'arrêt (7), et en ce que la matière d'étanchéité est un granulé de matière plastique.

2. Dispositif selon la revendication 1,
caractérisé
en ce que le piston de pression est formé par une surface frontale d'une tige (11) pouvant être enfoncée dans la cavité (10) et munie d'un entraînement (12) servant à la faire coulisser selon son axe longitudinal.

3. Dispositif selon les revendications 1 et 2,
caractérisé
en ce que l'entraînement pour la tige (11) est un servomoteur (12), de préférence une unité à piston et cylindre, dans laquelle la tige est de préférence la tige de piston.

4. Dispositif selon les revendications 1 et 2,
caractérisé
en ce que la cavité (10) dans laquelle la tige (11) peut être enfoncée est élargie à son extrémité qui est la plus éloignée du filetage d'arrêt (7) pour former une trémie (13) et forme de préférence le fond d'un réservoir (14) pour la matière d'étanchéité.

5. Dispositif selon les revendications 1 et 2,
caractérisé
en ce que deux interrupteurs (20) appartenant à un dispositif de commande (21) pour l'entraînement de la tige (11) sont agencés sur le trajet de la tige (11) ou à côté de ce trajet.

6. Dispositif selon la revendication 1,
caractérisé
en ce que le filetage d'arrêt (7) se trouve des deux côtés du débouché de la cavité (10).

7. Dispositif selon les revendications 1 et 6,
caractérisé
en ce que la chambre d'étanchement (6) est munie d'un dispositif d'équilibrage de la température (24) servant à maintenir une température aussi uniforme que possible sur la longueur de la paroi de la chambre d'étanchéité (6).

8. Dispositif selon la revendication 1,
caractérisé
en ce qu'une isolation thermique (25) est agencée entre la cavité (10) dans laquelle coulisse la tige (11) et la chambre d'étanchement (6) (et en particulier sa paroi).

9. Dispositif selon les revendications 1 et 4,
caractérisé
en ce qu'un dispositif de soufflage (17, 18) débouche dans la trémie (13) ou en ce qu'un dispositif agitateur ou de déplacement pour le granulé est agencé dans la trémie (13).

10. Dispositif selon la revendication 1,
caractérisé
en ce qu'à l'endroit du débouché de la cavité (10) d'amenée du granulé dans la chambre d'étanchement (6) qui reçoit le filetage d'arrêt (7), le filetage d'arrêt est interrompu par une gorge circonférentielle.

11. Dispositif selon la revendication 1,
caractérisé
en ce que le capteur de mesure destiné à mesurer le matière sortant de la chambre d'étanchement (6) et/ou des capteurs de mesure de pression sont disposés dans la chambre d'étanchement (6), et ces capteurs sont connectés au dispositif de commande (21) servant pour l'entraînement de la tige (11).

12. Procédé pour étancher un mandrin de cisaillement muni d'un filetage d'arrêt, ou une vis d'extrudeuse pour mélanges de caoutchouc et/ou matière plastique muni d'un filetage d'arrêt, qui consiste à introduire une matière d'étanchéité dans ce filetage d'arrêt,
caractérisé
en ce qu'on utilise comme matière d'étanchéité un granulé de matière plastique.

13. Procédé selon la revendication 12,
caractérisé
en ce que l'on n'injecte dans le filetage d'arrêt qu'une quantité de granulé de matière plastique limitée à une valeur telle que la matière sortant du filetage d'arrêt dans le sens du transport soit seulement légèrement plus grande que la matière du granulé de matière plastique qui est injectée dans le filetage d'arrêt.

14. Procédé selon la revendication 12,
caractérisé
en ce qu'on maintient la chambre recevant le filetage d'arrêt à une température qui est autant que possible inférieure à la température de fusion du granulé.
